# EUROPÄISCHE PATENTSCHRIFT

(11) **EP 4 004 594 B1**
(45) Veröffentlichungstag und Bekanntmachung des Hinweises auf die Patenterteilung: **11.09.2024**
(21) Anmeldenummer: 20746154.2
(22) Anmeldetag: 22.07.2020
(51) Int. Cl.: G01S 13/76, G07C 9/00

(54) **STEUERUNGSEINRICHTUNG FÜR EIN KRAFTFAHRZEUGZUGANGS- ODER LOKALISIERUNGSSYSTEM UND VERFAHREN**
CONTROL DEVICE FOR A MOTOR VEHICLE ACCESS OR LOCATING SYSTEM AND METHOD
DISPOSITIF DE COMMANDE D'UN SYSTÈME ET PROCÉDÉ D'ACCÈS OU DE LOCALISATION D'UN VÉHICULE AUTOMOBILE

(30) Priorität: 30.07.2019 DE 102019211264
(43) Veröffentlichungstag der Anmeldung: 01.06.2022
(73) Patentinhaber: Continental Automotive Technologies GmbH, 30175 Hannover (DE)
(72) Erfinder: REISINGER, Thomas, 81739 München (DE); TREINDL, Maximilian, 81739 München (DE); DOERING, Markus, 81739 München (DE)
(74) Vertreter: Continental Corporation
(86) Internationale Anmeldenummer: PCT/EP2020/070727
(87) Internationale Veröffentlichungsnummer: WO 2021/018702

(56) Entgegenhaltungen:
- EP-A1- 3 255 805
- WO-A2-2015/179154
- DE-A1- 102017 207 830

## Beschreibung

DE 10 2017 207830 A1 betrifft eine Steuerungseinrichtung für ein Kraftfahrzeugzugangs- oder Lokalisierungssystem und Verfahren. EP 3 255 805 A1 und WO 2015/179154 A2 betreffen weitere Steuerungseinrichtungen.

Die Erfindung betrifft Kraftfahrzeugzugangs- und Lokalisierungssysteme. Insbesondere betrifft die Erfindung eine Steuerungseinrichtung für ein Kraftfahrzeugzugangs- oder Lokalisierungssystem, ein Fahrzeug mit einer derartigen Steuerungseinrichtung, ein Zugangs- oder Lokalisierungssystem mit einer derartigen Steuerungseinrichtung und einem Funkschlüssel, ein Verfahren zum Betreiben eines Kraftfahrzeugzugangs- oder Lokalisierungssystems, ein Programmelement und ein computerlesbares Medium.

In Zugangs- oder Lokalisierungssystemen können drahtlose Übertragungstechniken angewandt werden, beispielsweise in Verbindung mit sogenannten Funkschlüsseln. Zur Verhinderung eines Missbrauchs können verschiedene Verfahren eingesetzt werden, um mit hinreichender Sicherheit beurteilen zu können, dass eine ordnungsgemäße Nutzung erfolgt.

Es ist eine Aufgabe der Erfindung, Zugangs- oder Lokalisierungssysteme weiterzubilden.

Diese Aufgabe wird durch den Gegenstand der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft eine Steuerungseinrichtung, insbesondere für ein Kraftfahrzeugzugangs- oder Lokalisierungssystem, welche eingerichtet ist zum Identifizieren eines empfangenen Signals, welches sich von einem Sender, beispielsweise einem Funkschlüssel oder einem Mobiltelefon, zu einem Empfänger der Steuerungseinrichtung, beispielsweise ein Antennensystem eines Kraftfahrzeugs, entlang des stärksten Signalpfads, dem sogenannten Peak Path, bewegt hat. Dieses Signal gilt dann als sogenanntes Peak Path Signal.

Die Steuerungseinrichtung ist darüber hinaus eingerichtet, die Signallaufzeit (Time of Flight, ToF) des Peak Path Signals zu bestimmen. Ebenfalls wird, ggf. in Abhängigkeit von der festgestellten Signallaufzeit des Peak Path Signals, ein zeitlicher Abstand δ von der Signallaufzeit bestimmt. Es wird sodann ein Schwellwert T für die Zuverlässigkeit einer First Path Suche in Abhängigkeit von 5 bestimmt. Die "Zuverlässigkeit" der First Path Suche entspricht dem Schwellwert, der bei der First Path Suche angelegt wird. Hierbei kann es sich um eine Ähnlichkeitsbestimmung der Präambel des empfangenen Signals mit der zu erwartenden Präambel handeln, ggf. in Abhängigkeit vom Signal-Rausch-Verhältnis des empfangenen Signals.

Danach wird die First Path Suche bei δ unter Berücksichtigung des Schwellwerts durchgeführt.

Bei δ kann es sich gemäß einer Ausführungsform um den maximal zugelassenen zeitlichen Abstand, δₘₐₓ, handeln. Größere zeitliche Abstände werden in diesem Fall nicht auf das Vorliegen eines First Path Signals untersucht.

Gemäß einer Ausführungsform erfolgt ein Klassifizieren eines in der First Path Suche detektierten Signals als sogenanntes First Path Signal, wenn der Schwellwert T überschritten wurde. Danach wird die First Path Suche beendet, da das First Path Signal ja gefunden und identifiziert ist.

Erfindungsgemäß ist die Steuerungseinrichtung eingerichtet, zu Entscheiden, dass kein First Path Signal bei 5 detektiert wurde, nämlich wenn der Schwellwert T nicht überschritten wurde. Danach wird ein neuer Schwellwert, Tₙₑᵤ, für die Zuverlässigkeit einer erneuten First Path Suche in Abhängigkeit eines vergrößerten oder verringerten zeitlichen Abstands, δ - Δ oder δ + Δ, von der Signallaufzeit des Peak Path Signals bestimmt. Danach wird die First Path Suche erneut durchgeführt, und zwar bei dem vergrößerten oder verringerten zeitlichen Abstand, δ - Δ oder δ + Δ, unter Berücksichtigung des neuen Schwellwerts.

Ist die First Path Suche auch hier erfolglos, kann der zeitliche Abstand für die erneute First Path Suche erneut vergrößert oder reduziert werden, gefolgt von einer neuen Bestimmung eines neuen Schwellwerts. Diese Schritte können solange erfolgen, bis ein First Path Signal detektiert wurde. Danach wird die First Path Suche beendet.

Erfindungsgemäß ist der jeweils neue Schwellwert, Tₙₑᵤ, kleiner oder gleich dem ursprünglichen Schwellwert, T, und kleiner oder gleich dem jeweils vorherigen bestimmten Schwellwert, wenn der zeitliche Abstand zum Peak Path Signal reduziert wurde.

Es handelt sich also um eine monoton fallende Kurve, welche die Abhängigkeit des zeitlichen Abstands der aktuellen First Path Suche von dem zu erfüllenden "Security Margin" beschreibt.

Gemäß einer weiteren Ausführungsform ist die Steuerungseinrichtung eingerichtet zum funktionsabhängigen, einbaupositionsabhängigen, ortsabhängigen und/oder zeitabhängigen Anpassen des Schwellwerts, T, und/oder des neuen Schwellwerts, Tₙₑᵤ.

Ein weiterer Aspekt betrifft ein Fahrzeug mit einer oben und im Folgenden beschriebenen Steuerungseinrichtung.

Ein weiterer Aspekt betrifft ein Zugangs- oder Lokalisierungssystem mit einer oben und im Folgenden beschriebenen Steuerungseinrichtung und einem Funkschlüssel.

Ein weiterer Aspekt betrifft ein Verfahren zum Betreiben eines Kraftfahrzeugzugangs- oder Lokalisierungssystems, aufweisend die Schritte:
Identifizieren eines empfangenen Signals, welches sich von einem Sender zu einem Empfänger einer Steuerungseinrichtung entlang des stärksten Signalpfads, Peak Path, bewegt hat, als Peak Path Signal;
Bestimmen der Signallaufzeit, ToF, des Peak Path Signals;
Bestimmen eines (ggf. maximal zugelassenen) zeitlichen Abstands, δ₍ₘₐₓ₎, von der Signallaufzeit des Peak Path Signals;
Bestimmen eines Schwellwerts, T, für die Zuverlässigkeit einer First Path Suche in Abhängigkeit von δ₍ₘₐₓ₎; und
Durchführen der First Path Suche bei δ₍ₘₐₓ₎ unter Berücksichtigung des Schwellwerts.

Ein weiterer Aspekt betrifft ein Programmelement, das, wenn es auf einer Steuerungseinrichtung eines Kraftfahrzeugzugangsoder Lokalisierungssystems ausgeführt wird, die Steuerungseinrichtung anweist, die oben und im Folgenden beschriebenen Schritte durchzuführen.

Ein weiterer Aspekt betrifft ein computerlesbares Medium, auf dem ein oben beschriebenes Programmelement gespeichert ist.

Im Folgenden werden mit Verweis auf die Figuren Ausführungsformen der Erfindung beschrieben. Die Darstellungen in den Figuren sind schematisch und nicht maßstäblich.

### Kurze Beschreibung der Figuren

Fig. 1 zeigt die Verteilung der Ranging-Fehler für LOS- und NLOS-Bedingungen.
Fig. 2 zeigt ein Path Loss Modell für UWB (Free Space und Ground Bounce), bei 6,5 GHz und 8,0 GHz.
Fig. 3 zeigt Zahlenbeispiele für First Path Dynamikanforderungen.
Fig. 4 zeigt eine Kennlinie für First Path Suche, die einen umso höheren Security Margin fordert, je größer der zeitliche Unterschied (δ) zwischen First Path und Peak Path ist.
Fig. 5 zeigt ein Beispiel für eine Implementierung der First Path Suche mit δ-abhängigem Security Margin.
Fig. 6 zeigt ein Kraftfahrzeugzugangs- oder Lokalisierungssystem.

### Detaillierte Beschreibung von Ausführungsformen

UWB (Ultrawide Band) Secure Ranging wird im Zusammenhang mit Fahrzeug-Zugangssystemen eingesetzt. Für die Bestimmung der Entfernung ("Ranging") wird "Two-Way Ranging" eingesetzt, üblicherweise das "Double-Sided Two-Way Ranging", das niedrigere Anforderungen an die Ganggenauigkeit der Quarze stellt.

Double-Sided Two-Way Ranging beschreibt eine Kommunikationssequenz, bei der die Kommunikationspartner Zeitstempel für gesendete und empfangene Pakete erzeugen. Aus den gesammelten Zeitstempeln lässt sich dann die Signallaufzeit, die "Time-of-Flight" (ToF), berechnen. ToF und Abstand der Kommunikationspartner können über die Lichtgeschwindigkeit ineinander umgerechnet werden, unter der Annahme, dass die ToF den direkten Pfad zwischen Kommunikationspartnern repräsentiert (und nicht eine Reflexion).

Für eine hohe Genauigkeit ist es ausschlaggebend, dass der Empfänger für jedes Paket die Time-of-Arrival, also die Signalankunft, also den Empfangs-Zeitstempel, möglichst präzise ermittelt. Besonders in reflektierenden Umgebungen mit Mehrwege-Ausbreitung ist diese Aufgabe nicht trivial, weil der interessierende direkte Pfad von Reflexionen mit stärkerem Signalpegel überdeckt sein kann.

Es kann vorgesehen sein, dass der Empfänger basierend auf dem stärksten Signalpfad (sogenannter "Peak Path") die Signal-Akquisition durchführt und durch Korrelation auf bekannte Symbole bzw. Sequenzen und Akkumulation über mehrere Symbole ein Abbild des Kanals ermittelt. In diesem Zusammenhang spricht man von "Channel Impulse Response", CIR. In einer Rückwärtssuche, beginnend beim Peak Path, wird, im Post-Processing, geprüft, ob vor dem Peak Path noch Signalpfade mit geringerem Pegel vorhanden sind. Das Ziel ist es, den frühesten Zeitpunkt der Signalankunft, den First Path, zu erkennen und diesen Zeitpunkt als Empfangs-Zeitstempel zu verwenden.

Die First Path Suche stellt ein Schwellwert-Problem dar, da der Algorithmus zwischen Rauschen und einem gültigen Pfad unterscheiden muss. Außerdem ist eine möglichst hohe Dynamik, zum Beispiel 30 dB, zwischen dem Peak Path und dem First Path erstrebenswert, um den First Path auch bei Szenarien mit Körperabschattung noch erkennen zu können.

Die Einführung der UWB-Technologie bei Fahrzeug-Zugangssystemen ist unter anderem motiviert durch den Sicherheits-Aspekt, da die ToF-Messung bei den heutigen passiven Zugangssystemen mögliche "Relay-Angriffen" (Funkstrecken-Verlängerung) verhindert. Allerdings ist es wichtig, dass die ToF-Messung manipulationssicher gestaltet wird, um durch einen Angriff auf die ToF-Messung, gegebenenfalls in Kombination mit Funkstrecken-Verlängerung, das System nicht zu kompromittieren. Neben kryptologischen Maßnahmen bei der Datenübertragung der gemessenen Zeitstempel ist entscheidend, dass die Zeitstempel-Ermittlung selbst von einem Angreifer nicht zu seinen Gunsten beeinflusst werden kann.

Beim "Secure Ranging" wird dazu eine Sequenz verwendet, die nur den Kommunikationspartnern bekannt ist. In diesem Zusammenhang wird auch der Begriff "Secure Training Sequence", STS, verwendet. Auf Basis dieser Sequenz nimmt der Empfänger die Korrelation und Akkumulation für die CIR vor. Unter der Annahme, dass dem Angreifer keine sonstige Information über die verwendete STS vorliegen, muss er eine ToF-Manipulation auf einen Angriff mit einer geratenen STS stützen. Zum Beispiel kann der Angreifer ein gültiges Signal verlängern und versuchen, durch Einfügen einer geratenen STS einen früheren First Path vorzutäuschen ("STS Injection"). Die dadurch mögliche Manipulation der ToF-Messung wird "Distance Gain" genannt. Die Wahrscheinlichkeit, mit der ein Angreifer eine STS rät, die einen gültigen Pfad in der CIR hervorruft, repräsentiert das Sicherheits-Niveau einer Implementierung.

Bei der First Path Suche entsteht nun ein Zielkonflikt bezüglich der Schwellen-Festlegung: Für eine möglichst geringe Angriffs-Erfolgswahrscheinlichkeit sollte die Schwelle für einen gültigen Pfad möglichst hoch gesetzt werden. Eine hohe Schwelle bedeutet, dass die First Path Erkennung nur Pfade akzeptiert, die sehr zuverlässig auf einem tatsächlichen Signal basieren (kein Rauschen, kein geratenes Signal), also eine möglichst deutliche Ausprägung des Pfades in der CIR erforderlich macht. Dies ist im Widerspruch zu dem Ziel, eine möglichst hohe First Path Dynamik bzw. First Path Empfindlichkeit zu erzielen, was eine möglichst niedrige Schwellen-Festlegung nach sich zieht (auch gering ausgeprägte Pfade oder Pfade nahe der Rauschgrenze werden noch akzeptiert). Dieser Zielkonflikt besteht unabhängig von der konkreten Implementierung der First Path Entscheidungs-Schwelle.

Als Lösung des Zielkonflikts kann die Ermittlung zweier (oder mehrerer) Zeitstempel vorgesehen sein, wobei einer der Zeitstempel optimiert ist auf Performance (Dynamik) und ein zweiter optimiert ist auf Sicherheit (Security) . Damit erhält man letztendlich auf Basis eines Ranging-Ablaufs zwei ToF-Ergebnisse: ein sehr zuverlässiges (Security), aber eventuell ungenaues, und ein sehr genaues (Performance), aber eventuell manipuliertes, Ergebnis, über deren Verwendung auf funktionaler Ebene entschieden werden kann.

So könnte etwa der Security-Wert für "Relay Attack Defence" (hohe Anforderung an Security, niedrige Anforderung an Genauigkeit und Aktualisierungs-Rate) und der Performance-Wert für Lokalisierung (hohe Anforderung an Genauigkeit und Aktualisierungsrate) verwendet werden. Wenn jedoch zum Beispiel nur ein oder wenige Kommunikations-Zyklen durchgeführt werden können und dabei kein Ranging die Security-Schwelle erreicht (also kein Security-Ergebnis vorliegt), kann dies zu Problemen führen.

Die Implementierung der First Path Suche selbst berücksichtigt neben diesem Zielkonflikt weitere Parameter, wie die tatsächliche Signal-Amplitude oder das Signal-Rausch-Verhältnis. Es ist vorteilhaft, den bei der First Path Bestimmung gegebenen Zielkonflikt "Security versus Performance" möglichst transparent in einem ToF-Ergebnis aufzulösen und in die First Path Suche zu integrieren.

Die Erkennung des sogenannten Peak Path kann mit einem sehr hohen Sicherheits-Niveau durchgeführt werden, ohne dabei Kompromisse bei der Empfindlichkeit oder Performance eingehen zu müssen. Für eine fachgerechte Implementierung wird also angenommen, dass es einem Angreifer nicht möglich ist, durch Raten einer STS einen Peak Path zu fälschen. Der Peak Path wird als vertrauenswürdig angenommen.

Des Weiteren lassen sich folgende Zusammenhänge feststellen:

### 1. Security-Risiko

Für einen Angreifer ist die Erzielung eines möglichst hohen "Distance Gain" attraktiv, weil er damit größere Funkstreckenverlängerungen verdecken kann. Die Schadensschwere ist also umso größer zu bewerten, je größer der erzielbare Distance Gain ist. Um das Risiko zu begrenzen, kann die Wahrscheinlichkeit, einen hohen Distance Gain zu erzielen, verringert werden. Der Distance Gain ist proportional zu dem zeitlichen Abstand des erkannten First Path und des Peak Path in der CIR.

Umgekehrt ist der Schaden gering, wenn der Distance Gain klein ist, also der Abstand First Path zu Peak Path in der CIR gering ist. Für diesen Fall ist eine etwas höhere Erfolgswahrscheinlichkeit für den Angreifer akzeptabel.

### Zahlenwerte:

Ein sinnvoller Distance Gain für den Angreifer beträgt mehrere Meter, zum Beispiel mindestens 3 m. Andernfalls sind selbst grenzwertige Angriffsszenarien wie der sogenannte Haustürangriff (nur kleine Funkstreckenverlängerung notwendig) schon theoretisch gar nicht möglich. Es ist außerdem zu berücksichtigen, dass die Anforderungen an den Distance Gain für eine praktische Realisierung noch deutlich höher liegen, da jegliche vom Angreifer genutzte Apparaturlatenzen in den Signalpfad einbringt.

### 2. Genauigkeitsverbesserung

Bereits bei im Vergleich zu 1. kleinen zeitlichen Unterschieden zwischen First Path und Peak Path kann mit einer präziseren First Path Erkennung eine relevante Genauigkeitsverbesserung entstehen, weil die angestrebte Genauigkeit mindestens eine Größenordnung unter dem Distance Gain für einen relevanten Angriff liegt.

Des Weiteren zeigt sich in der Praxis, dass bei dem Großteil der Mehrwege-Szenarien der zeitliche Unterschied zwischen First Path und Peak Path klein ist, und große Unterschiede, die einem Bereich von mehreren Metern entsprechen, sehr selten sind.

### Zahlenwerte:

Für Fahrzeug-Zugangssysteme liegt die angestrebte Genauigkeit bei +/- 10 cm. Dies ist notwendig, um eine präzise Zonen-Erkennung bei Annäherung zu gewährleisten, sowie eine zuverlässige Innen-/Außenraum-Erkennung zu ermöglichen.

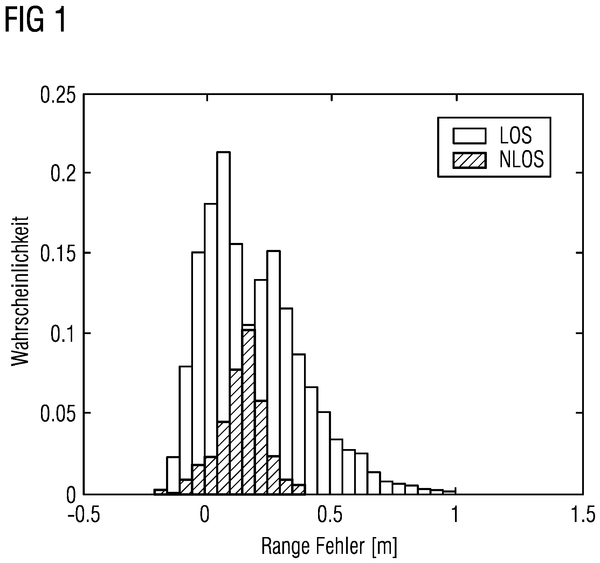

Bei vielen Mehrwege-Szenarien liegt der resultierende Fehler durch Nichterkennen des tatsächlichen direkten Pfads bei wenigen Metern, meist weniger als 1,5 m, vgl. Fig. 1.

### 3. Performance-Anforderung First Path Dynamik

Aus praktischen Überlegungen lässt sich herleiten, dass die Anforderungen an die First Path Dynamik abnehmen, wenn der zeitliche Unterschied von Peak Path und First Path zunimmt: Für ein gegebenes Szenario bleibt der First Path Empfangspegel immer gleich (zum Beispiel gegebene Entfernung und Körperdämpfung), während der Empfangspegel für den Peak Path (= reflektiertes Signal) mit steigendem Unterschied (= längerer Reflexionspfad) abnimmt, so dass das Pegelverhältnis für First Path zu Peak Path sinkt.

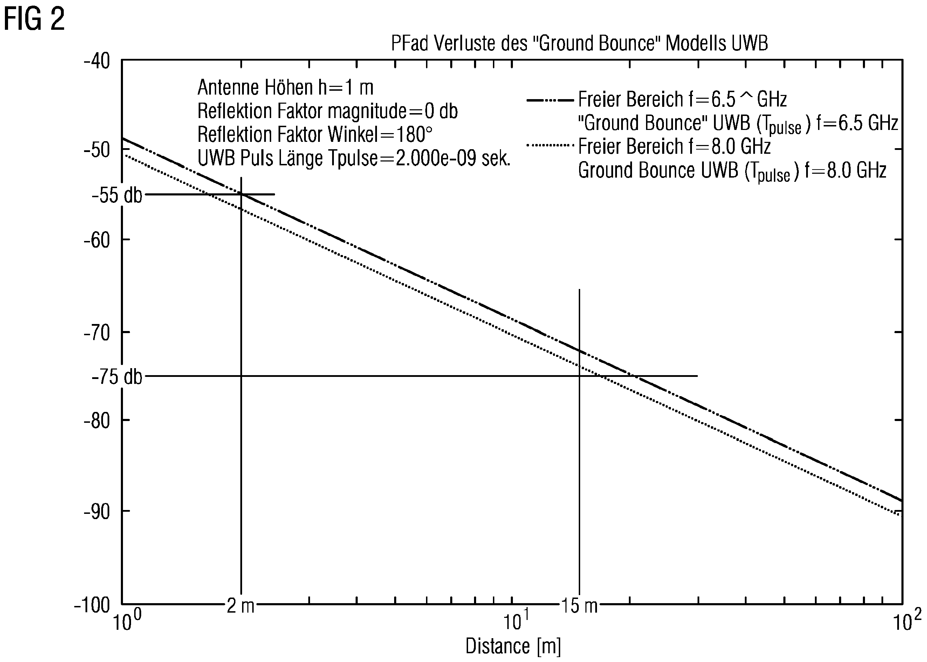

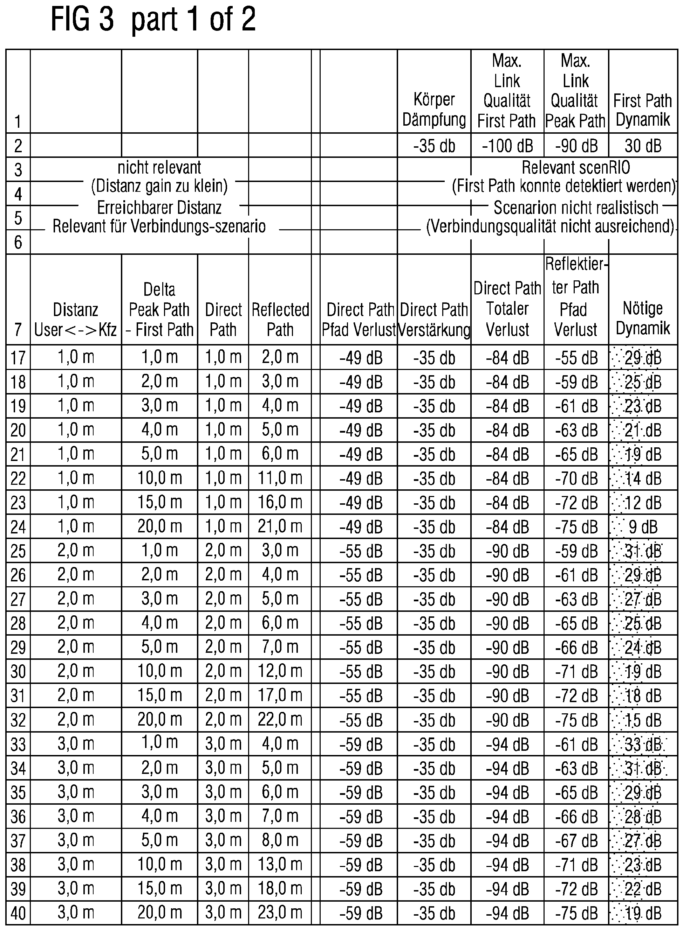

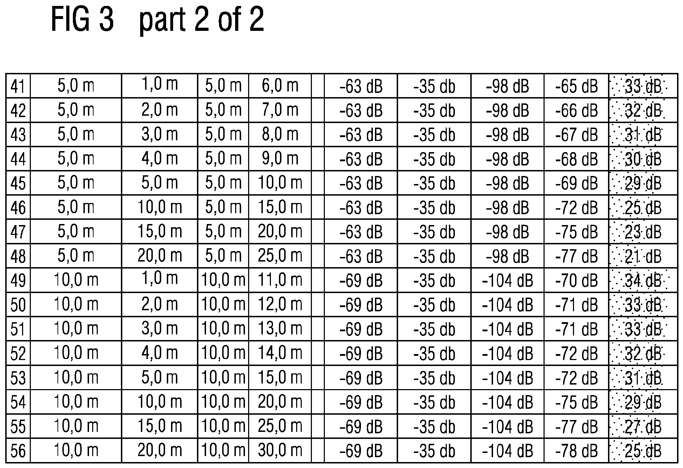

Ein Beispiel hierfür ist in dem sogenannten Back-Pocket-Szenario der Fig. 2 und 3 gezeigt.

Fig. 2 zeigt hierbei ein Path Loss Modell für UWB (Free Space und Ground Bounce), bei 6,5 GHz und 8, 0 GHz. Fig. 3 zeigt ein Zahlenbeispiel für First Path Dynamik-Anforderungen.

Der Nutzer steht beispielsweise 2 m vor dem Auto. Der direkte Pfad (2 m) ist durch Körperabschattung (35 dB) stark abgeschwächt. Das reflektierte Signal (zum Beispiel von der Garagenwand) ist jedoch sehr stark.

Die Dämpfung des direkten Pfads beträgt gemäß UWB Path Loss Modell (Fig. 2) 55 dB für 2 m Entfernung. Die gesamte Dämpfung inkl. 35 dB Körperabschattung also 90 dB.

Nimmt man an, dass der Reflexionspfad nur geringfügig länger ist (Garagenwand sehr nah), zum Beispiel 1 m länger als der direkte Pfad (Zeile 25 in der Tabelle Fig. 3), so ergibt sich eine Dämpfung des reflektierten Pfads von 59 dB und damit eine notwendige First Path Dynamik von 31 dB (= 90 dB - 59 dB).

Unterstellt man einen längeren Reflexionspfad (Garagenwand weiter weg), beispielsweise 10 m länger als der direkte Pfad (vgl. Zeile 30 in der Tabelle Fig. 3), so ist die Dämpfung des reflektierten Pfads bereits 71 dB und die notwendige First Path Dynamik beträgt nur noch 19 dB (= 90 db - 71 dB).

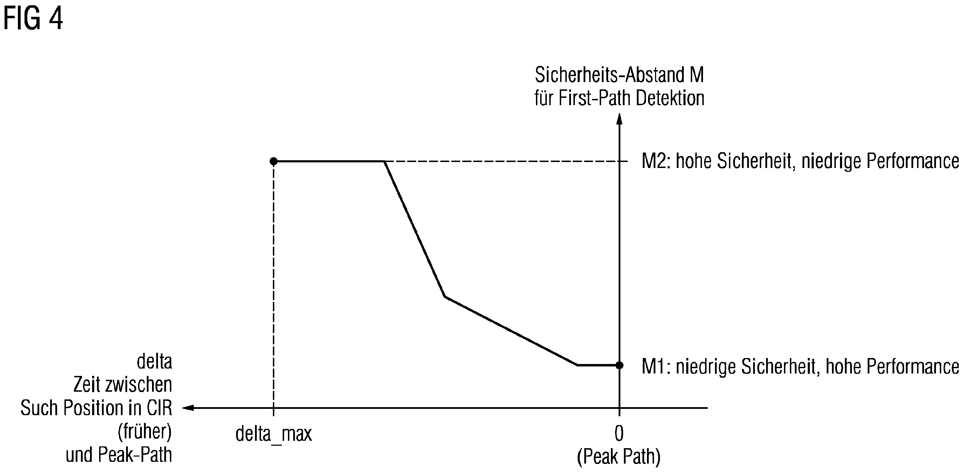

Aus den genannten Beobachtungen ergibt sich nun der folgende Lösungsansatz:
1. Implementierung einer Kennlinie mit veränderlichem Sicherheits-Anteil ("Security Margin") für die Schwelle bei der First Path Suche.
2. Der Security Margin ist steigend oder monoton steigend mit zunehmendem δ. δ bezeichnet im Weiteren den zeitlichen Abstand zwischen der Signallaufzeit des Peak Path Signals und einem Punkt in der CIR, vgl. auch Fig. 4.
3. Ab einem gewissen Abstand δₘₐₓ wird kein First Path mehr akzeptiert.
4. Die Kennlinie weist einen Mindest-Sicherheits-Margin M1 auf, der auch 0 sein kann.
5. Die Kennlinie weist einen Maximal-Sicherheits-Margin M2 auf, der bereits vor δₘₐₓ erreicht sein kann.
6. Die genaue Beschaffenheit der Kennlinie kann über Funktionsvorschriften oder eine Tabelle (LUT, "Look Up Table") definiert sein.

Fig. 4 zeigt beispielhaft eine Kennlinie für einen solchen Security Margin.

Wie aus der Kennlinie der Fig. 4 ersichtlich ist, fordert die First Path Suche im Regelfall einen umso höheren Security Margin, je größer der zeitliche Unterschied zwischen First Path und Peak Path ist. Abschnitte dieser Kurve können aber auch horizontal verlaufen oder positive Steigung aufweisen. Die Genaue Form der Kurve kann von der entsprechenden Anwendung abhängen.

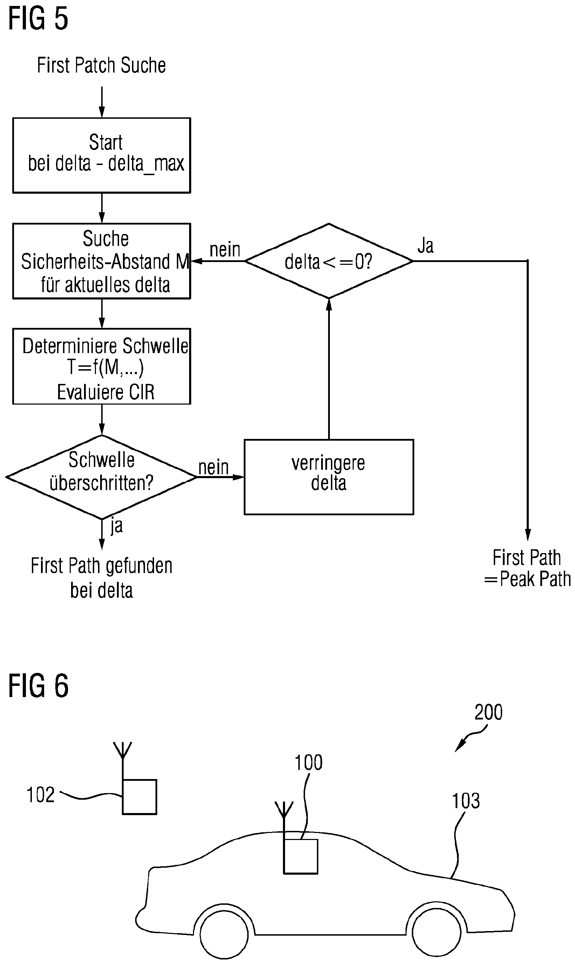

Fig. 5 zeigt ein Flussdiagramm eines Verfahrens zum Betreiben eines Kraftfahrzeugzugangs- oder Lokalisierungssystems. Zunächst erfolgt eine First Path Suche, also ein Identifizieren eines empfangenen Signals, welches sich von einem Sender zu einem Empfänger einer Steuerungseinrichtung entlang des stärksten Signalpfads, Peak Path, bewegt hat. Ist dieses Peak Path Signal identifiziert, startet die Suche vorteilhafterweise bei dem maximal möglichen zeitlichen Abstand δₘₐₓ von der Signallaufzeit des Peak Path Signals. Ein frühzeitiges Abbrechen des Verfahrens im Erfolgsfall, also bei Identifizierung des First Path Signals, ist möglich.

Es kann vorgesehen sein, dass danach der "Security Margin" M für den aktuellen Suchabstand δ ermittelt wird, beispielsweise über eine Look Up Table. Der aktuelle Suchabstand δ wird zu Beginn des Verfahrens beispielsweise δₘₐₓ betragen und dann, schrittweise, verringert werden, bis der First Path bzw. die entsprechende Signallaufzeit ermittelt wurde.

In Abhängigkeit von M wird dann der Schwellwert T für die gewünschte Zuverlässigkeit der (fehlerfreien) First Path Suche ermittelt. Die Festlegung von T kann noch weitere Abhängigkeiten enthalten, und beispielsweise vom Signal-Rausch-Verhältnis abhängig sein. Wird der Schwellwert T für die Zuverlässigkeit der First Path Suche für den aktuellen Suchabstand δ überschritten (Positivkriterium), wird dieses δ als "First Path" deklariert. Die Suche ist in diesem Falle beendet, da kein früherer Zeitpunkt für den First Path mehr gefunden werden kann.

Eine zusätzliche Optimierung kann erreicht werden, wenn die Parameter für die in Fig. 4 gezeigte Kennlinie und damit das Sicherheitsprofil der Implementierung nutzungs- und situationsbedingt angepasst werden.

Beispielsweise kann eine funktionsabhängige Anpassung des Sicherheitsprofils erfolgen, indem beispielsweise die Zugriffsfunktion auf das Fahrzeug höhere Sicherheitsanforderungen zu erfüllen hat als beispielsweise das "Welcome Lighting".

Auch kann die Einbauposition Einfluss auf die Anpassung des Sicherheitsprofils haben. Zum Beispiel erhalten innen verbaute Transceiver eine andere Kennlinie als außen verbaute, da das erwartete Reflexionsverhalten (und damit die Anforderungen an die First Path Erkennung) unterschiedlich sind. Auch ist eine ortsabhängige Anpassung des Sicherheitsprofils möglich, zum Beispiel insbesondere an Orte mit erhöhter Diebstahlgefahr, wo die Kurve beispielsweise steiler sein wird und/oder nach oben verschoben.

Ebenso ist es möglich, eine zeitlich abhängige Anpassung des Sicherheitsprofils vorzunehmen. Beispielsweise kann die Kurve nachts im Vergleich zu tagsüber nach oben verschoben sein. Ebenso ist es möglich, dieses Sicherheitsniveau bei Erhöhung der Standzeit des Fahrzeugs anzuheben.

Auch sind protokollabhängige Anpassungen möglich. Beispielsweise kann ein anderes Relay Attack Prevention Verfahren nebenläufig eingesetzt werden. Wenn beispielsweise noch andere Mechanismen zur Relay Attack Prevention eingesetzt werden, kann das Sicherheitsniveau entsprechend angepasst (gesenkt) werden. Beispiele für solche Mechanismen sind Nutzererkennung durch Lidar/Radar, Gesichtserkennung, Plausibilisierung des Zugangs mittels Bewegungssensor-Daten im Schlüssel/Mobilteil oder auch wiederholte Durchführung der ToF-Messung.

Durch das oben beschriebene Verfahren kann eine parametrische Kontrolle des Sicherheitsniveaus einer Implementierung erfolgen. Es ist eine einfache Integration in bestehende Implementierungen (First Path Suche) möglich.

Fig. 6 zeigt ein Zugangs- oder Lokalisierungssystem 200 mit einer Steuerungseinrichtung 100, die in einem Fahrzeug 103 verbaut ist, und einem Funkschlüssel 102, der den weiter oben beschriebenen Sender darstellt.

## Patentansprüche

1. Steuerungseinrichtung (100) für ein Kraftfahrzeugzugangsoder Lokalisierungssystem (200), eingerichtet zum:
Identifizieren eines empfangenen Signals, welches sich von einem Sender zu einem Empfänger der Steuerungseinrichtung entlang des stärksten Signalspfads, Peak Path, bewegt hat, als Peak Path Signal;
Bestimmen der Signallaufzeit, ToF, des Peak Path Signals;
Bestimmen eines zeitlichen Abstands, δ, von der Signallaufzeit des Peak Path Signals;
Bestimmen eines Schwellwerts, T, für die Zuverlässigkeit einer First Path Suche in Abhängigkeit von δ;
Durchführen der First Path Suche bei δ unter Berücksichtigung des Schwellwerts,
eingerichtet zum:
Entscheiden, dass kein First Path Signal detektiert wurde, wenn der Schwellwert, T, nicht überschritten wurde;
Bestimmen eines neuen Schwellwerts, Tneu, für die Zuverlässigkeit einer erneuten First Path Suche in Abhängigkeit eines neuen zeitlichen Abstands, δ - Δ oder δ + Δ, von der Signallaufzeit des Peak Path Signals;
Durchführen einer erneuten First Path Suche bei dem neuen zeitlichen Abstand, δ - Δ oder δ + Δ, unter Berücksichtigung des neuen Schwellwerts,
wobei der neue Schwellwert, Tneu, kleiner oder gleich dem ursprünglichen Schwellwert, T, ist, wenn sich der zeitliche Abstand von der Signallaufzeit des Peak Path Signals verringert hat.

2. Steuerungseinrichtung (100) nach Anspruch 1, eingerichtet zum:
Klassifizieren eines in der First Path Suche detektierten Signals als First Path Signal, wenn der Schwellwert, T, überschritten wurde;
Beenden der First Path Suche.

3. Steuerungseinrichtung (100) nach einem der vorherigen Ansprüche, eingerichtet zum:
funktionsabhängigen Anpassen des Schwellwerts, T, und/oder des neuen Schwellwerts, Tneu.

4. Steuerungseinrichtung (100) nach einem der vorherigen Ansprüche, eingerichtet zum:
einbaupositionsabhängigen, ortsabhängigen und/oder zeitabhängigen Anpassen des Schwellwerts, T, und/oder des neuen Schwellwerts, Tneu.

5. Fahrzeug (103) mit einer Steuerungseinrichtung (100) nach einem der Ansprüche 1 bis 4.

6. Zugangs- oder Lokalisierungssystem (200) mit einer Steuerungseinrichtung (100) nach einem der Ansprüche 1 bis 4 und einem Funkschlüssel (102).

7. Verfahren zum Betreiben eines Kraftfahrzeugzugangs- oder Lokalisierungssystems (200), aufweisend die Schritte:
Identifizieren eines empfangenen Signals, welches sich von einem Sender zu einem Empfänger einer Steuerungseinrichtung entlang des stärksten Signalspfads, Peak Path, bewegt hat, als Peak Path Signal;
Bestimmen der Signallaufzeit, ToF, des Peak Path Signals;
Bestimmen eines zeitlichen Abstands, δ, von der Signallaufzeit des Peak Path Signals;
Bestimmen eines Schwellwerts, T, für die Zuverlässigkeit einer First Path Suche in Abhängigkeit von δ;
Durchführen der First Path Suche bei δ unter Berücksichtigung des Schwellwerts,
umfassend ein:
Entscheiden, dass kein First Path Signal detektiert wurde, wenn der Schwellwert, T, nicht überschritten wurde;
Bestimmen eines neuen Schwellwerts, Tneu, für die Zuverlässigkeit einer erneuten First Path Suche in Abhängigkeit eines neuen zeitlichen Abstands, δ - Δ oder δ + Δ, von der Signallaufzeit des Peak Path Signals;
Durchführen einer erneuten First Path Suche bei dem neuen zeitlichen Abstand, δ - Δ oder δ + Δ, unter Berücksichtigung des neuen Schwellwerts,
wobei der neue Schwellwert, Tneu, kleiner oder gleich dem ursprünglichen Schwellwert, T, ist, wenn sich der zeitliche Abstand von der Signallaufzeit des Peak Path Signals verringert hat.

8. Programmelement, das, wenn es auf einer Steuerungseinrichtung (100) eines Kraftfahrzeugzugangs- oder Lokalisierungssystems (200) ausgeführt wird, die Steuerungseinrichtung anweist, die folgenden Schritte durchzuführen:
Identifizieren eines empfangenen Signals, welches sich von einem Sender zu einem Empfänger einer Steuerungseinrichtung entlang des stärksten Signalspfads, Peak Path, bewegt hat, als Peak Path Signal;
Bestimmen der Signallaufzeit, ToF, des Peak Path Signals;
Bestimmen eines zeitlichen Abstands, δ, von der Signallaufzeit des Peak Path Signals;
Bestimmen eines Schwellwerts, T, für die Zuverlässigkeit einer First Path Suche in Abhängigkeit von δ;
Durchführen der First Path Suche bei δ unter Berücksichtigung des Schwellwerts,
eingerichtet zum:
Entscheiden, dass kein First Path Signal detektiert wurde, wenn der Schwellwert, T, nicht überschritten wurde;
Bestimmen eines neuen Schwellwerts, Tneu, für die Zuverlässigkeit einer erneuten First Path Suche in Abhängigkeit eines neuen zeitlichen Abstands, δ - Δ oder δ + Δ, von der Signallaufzeit des Peak Path Signals;
Durchführen einer erneuten First Path Suche bei dem neuen zeitlichen Abstand, δ - Δ oder δ + Δ, unter Berücksichtigung des neuen Schwellwerts,
wobei der neue Schwellwert, Tneu, kleiner oder gleich dem ursprünglichen Schwellwert, T, ist, wenn sich der zeitliche Abstand von der Signallaufzeit des Peak Path Signals verringert hat.

9. Computerlesbares Medium, auf dem ein Programmelement nach Anspruch 8 gespeichert ist.

## Claims

1. Control apparatus (100) for a motor vehicle access or localization system (200), configured to:
identify a received signal that has travelled from a transmitter to a receiver of the control apparatus along the strongest signal path, the peak path, as the peak path signal;
determine the time of flight, ToF, of the peak path signal;
determine a time difference, δ, from the time of flight of the peak path signal;
determine a threshold value, T, for the reliability of a first path search depending on δ;
carry out the first path search with δ, taking the threshold value into consideration, configured to:
decide that no first path signal has been detected if the threshold value, T, has not been exceeded;
determine a new threshold value, Tnew, for the reliability of a renewed first path search depending on a new time difference, δ - Δ or δ + Δ, from the time of flight of the peak path signal;
carry out a renewed first path search with the new time difference, δ - Δ or δ + Δ, taking the new threshold value into consideration,
wherein the new threshold value, Tnew, is less than or equal to the original threshold value, T, if the time difference from the time of flight of the peak path signal has decreased.

2. Control apparatus (100) according to Claim 1, configured to:
classify a signal detected in the first path search as the first path signal if the threshold value, T, has been exceeded;
end the first path search.

3. Control apparatus (100) according to either of the preceding claims, configured to:
adjust the threshold value, T, and/or the new threshold value, Tnew, depending on the function.

4. Control apparatus (100) according to either of the preceding claims, configured to:
adjust the threshold value, T, and/or the new threshold value, Tnew, depending on the installation position, the location and/or the time.

5. Vehicle (103) comprising a control apparatus (100) according to one of Claims 1 to 4.

6. Access or localization system (200) comprising a control apparatus (100) according to one of Claims 1 to 4 and a radio key (102).

7. Method for operating a motor vehicle access or localization system (200), having the steps of:
identifying a received signal that has travelled from a transmitter to a receiver of a control apparatus along the strongest signal path, the peak path, as the peak path signal;
determining the time of flight, ToF, of the peak path signal;
determining a time difference, δ, from the time of flight of the peak path signal;
determining a threshold value, T, for the reliability of a first path search depending on δ;
carrying out the first path search with δ, taking the threshold value into consideration,
comprising:
deciding that no first path signal has been detected if the threshold value, T, has not been exceeded;
determining a new threshold value, Tnew, for the reliability of a renewed first path search depending on a new time difference, δ - Δ or δ + Δ, from the time of flight of the peak path signal;
carrying out a renewed first path search with the new time difference, δ - Δ or δ + Δ, taking the new threshold value into consideration,
wherein the new threshold value, Tnew, is less than or equal to the original threshold value, T, if the time difference from the time of flight of the peak path signal has decreased.

8. Program element that, when executed on a control apparatus (100) of a motor vehicle access or localization system (200), instructs the control apparatus to carry out the following steps of:
identifying a received signal that has travelled from a transmitter to a receiver of a control apparatus along the strongest signal path, the peak path, as the peak path signal;
determining the time of flight, ToF, of the peak path signal;
determining a time difference, δ, from the time of flight of the peak path signal;
determining a threshold value, T, for the reliability of a first path search depending on δ;
carrying out the first path search with δ, taking the threshold value into consideration,
configured to:
decide that no first path signal has been detected if the threshold value, T, has not been exceeded;
determine a new threshold value, Tnew, for the reliability of a renewed first path search depending on a new time difference, δ - Δ or δ + Δ, from the time of flight of the peak path signal;
carry out a renewed first path search with the new time difference, δ - Δ or δ + Δ, taking the new threshold value into consideration,
wherein the new threshold value, Tnew, is less than or equal to the original threshold value, T, if the time difference from the time of flight of the peak path signal has decreased.

9. Computer-readable medium on which a program element according to Claim 8 is stored.

## Revendications

1. Dispositif de commande (100) pour un système d'accès ou de localisation de véhicule automobile (200), conçu pour :
identifier un signal reçu qui s'est déplacé d'un émetteur à un récepteur du dispositif de commande le long du trajet de signal le plus fort, trajet de crête, en tant que signal de trajet de crête ;
déterminer le temps de propagation du signal, ToF, du signal de trajet de crête ;
déterminer un écart dans le temps, δ, par rapport au temps de propagation du signal de trajet de crête ;
déterminer une valeur de seuil, T, pour la fiabilité d'une recherche de premier trajet en fonction de δ;
effectuer la recherche de premier trajet avec δ en tenant compte de la valeur de seuil,
conçu pour:
décider qu'aucun signal de premier trajet n'a été détecté lorsque la valeur de seuil, T, n'a pas été dépassée ;
déterminer une nouvelle valeur de seuil, Tneu, pour la fiabilité d'une nouvelle recherche de premier trajet en fonction d'un nouvel écart dans le temps, δ - Δ ou δ + Δ, par rapport au temps de propagation du signal de trajet de crête ;
effectuer une nouvelle recherche de premier trajet avec le nouvel écart dans le temps, δ - Δ ou δ + Δ, en tenant compte de la nouvelle valeur de seuil,
la nouvelle valeur de seuil, Tneu, étant inférieure ou égale à la valeur de seuil initiale, T, lorsque l'écart dans le temps par rapport au temps de propagation du signal de trajet de crête a diminué.

2. Dispositif de commande (100) selon la revendication 1, conçu pour :
classifier un signal détecté dans la recherche de premier trajet en tant que signal de premier trajet lorsque la valeur de seuil, T, a été dépassée ;
mettre fin à la recherche de premier trajet.

3. Dispositif de commande (100) selon l'une des revendications précédentes, conçu pour:
adapter, en fonction de la fonction, la valeur de seuil, T, et/ou la nouvelle valeur de seuil, Tneu.

4. Dispositif de commande (100) selon l'une des revendications précédentes, conçu pour :
adapter la valeur de seuil, T, et/ou la nouvelle valeur de seuil, Tneu, en fonction de la position d'installation, en fonction eu lieu et/ou en fonction du temps.

5. Véhicule (103) comprenant un dispositif de commande (100) selon l'une des revendications 1 à 4.

6. Système d'accès ou de localisation (200) comprenant un dispositif de commande (100) selon l'une des revendications 1 à 4 et une clé radio (102).

7. Procédé pour faire fonctionner un système d'accès ou de localisation de véhicule automobile (200), comprenant les étapes consistant à :
identifier un signal reçu qui s'est déplacé d'un émetteur à un récepteur d'un dispositif de commande le long du trajet de signal le plus fort, trajet de crête, en tant que signal de trajet de crête ;
déterminer le temps de propagation du signal, ToF, du signal de trajet de crête ;
déterminer un écart dans le temps, δ, par rapport au temps de propagation du signal de trajet de crête ;
déterminer une valeur de seuil, T, pour la fiabilité d'une recherche de premier trajet en fonction de δ;
effectuer la recherche de premier trajet avec δ en tenant compte de la valeur de seuil,
comprenant :
décider qu'aucun signal de premier trajet n'a été détecté lorsque la valeur de seuil, T, n'a pas été dépassée ;
déterminer une nouvelle valeur de seuil, Tneu, pour la fiabilité d'une nouvelle recherche de premier trajet en fonction d'un nouvel écart dans le temps, δ - Δ ou δ + Δ, par rapport au temps de propagation du signal de trajet de crête ;
effectuer une nouvelle recherche de premier trajet avec le nouvel écart dans le temps, δ - Δ ou δ + Δ, en tenant compte de la nouvelle valeur de seuil,
la nouvelle valeur de seuil, Tneu, étant inférieure ou égale à la valeur de seuil initiale, T, lorsque l'écart dans le temps par rapport au temps de propagation du signal de trajet de crête a diminué.

8. Élément de programme qui, lorsqu'il est exécuté sur un dispositif de commande (100) d'un système d'accès ou de localisation de véhicule automobile (200), ordonne au dispositif de commande d'exécuter les étapes suivantes :
identifier un signal reçu qui s'est déplacé d'un émetteur à un récepteur d'un dispositif de commande le long du trajet de signal le plus fort, trajet de crête, en tant que signal de trajet de crête ;
déterminer le temps de propagation du signal, ToF, du signal de trajet de crête ;
déterminer un écart dans le temps, δ, par rapport au temps de propagation du signal de trajet de crête ;
déterminer une valeur de seuil, T, pour la fiabilité d'une recherche de premier trajet en fonction de δ;
effectuer la recherche de premier trajet avec δ en tenant compte de la valeur de seuil,
conçu pour:
décider qu'aucun signal de premier trajet n'a été détecté lorsque la valeur de seuil, T, n'a pas été dépassée ;
déterminer une nouvelle valeur de seuil, Tneu, pour la fiabilité d'une nouvelle recherche de premier trajet en fonction d'un nouvel écart dans le temps, δ - Δ ou δ + Δ, par rapport au temps de propagation du signal de trajet de crête ;
effectuer une nouvelle recherche de premier trajet avec le nouvel écart dans le temps, δ - Δ ou δ + Δ, en tenant compte de la nouvelle valeur de seuil,
la nouvelle valeur de seuil, Tneu, étant inférieure ou égale à la valeur de seuil initiale, T, lorsque l'écart dans le temps par rapport au temps de propagation du signal de trajet de crête a diminué.

9. Support lisible par ordinateur sur lequel est enregistré un élément de programme selon la revendication 8.
